# EUROPEAN PATENT APPLICATION

(11) **EP 1 732 302 A1**
(43) Date of publication of application: **13.12.2006**
(21) Application number: 05300462.8
(22) Date of filing: 07.06.2005
(51) Int. Cl.: H04M 15/00, H04M 17/00, H04Q 7/38, H04L 12/14

(54) **Notification of changed call tariff to communication device**

(71) Applicant: Hewlett-Packard Development Company, L.P., Houston, TX 77070 (US)
(72) Inventor: Kortesniemi, Jukka, F-38053, Grenoble Cedex 09 (FR)
(74) Representative: Franks, Adam Peter

(57) **Abstract**

According to one aspect of the present there is provided a method, in a billing system, of supplying information to a communication device, comprising, in response to receiving a request to authorize a communication with the communication device: obtaining details of charging parameter applicable to the communication; providing the obtained details to the communication device; determining, during the communication, a change in the charging parameter applicable to the communication; and providing details of the change to the communication device.

## Description

The present invention relates to the field of communication systems and, more particularly, to methods and apparatus for notifying a user of a communication device of a change in a charging parameter, such as a billing rate, applicable to a communication during the communication.

Use of communication devices for accessing communication services is typically subject to a communication charge being levied on the user by the communication network provider. For example, in the case of conventional mobile telephone networks, a charge is levied whenever a user makes a charge-incurring use of the network. A charge-incurring use may occur, for example, when a subscriber makes a telephone call to a non-free telephone number, or when a user accesses a data networks such as the Internet, or the like.

In order to make use of a communication network, such as a telephony network, a user is typically required to subscribe to the network and to have an account with the telephony network operator, so that any charges arising through any charge-incurring use of the network may be billed to the subscribers account. Billing is typically performed either as post-paid billing or as pre-paid billing.

In mobile communications, the billing rate applicable to any telephone call is dependent partly on the called telephone subscriber number, and partly on the location of the mobile communication device used to make the call.

For example, a mobile communication device is typically registered with a home communication network of which the user of the device is a subscriber. Calls made from within the home communication network are charged to the user at an appropriate rate. Mobile communication devices may also typically make use of communication networks other than the home network, for example use of foreign communication networks, where specific so-called roaming agreements exist between the home and foreign communication networks.

However, calls made when roaming are typically subject to different, and typically higher, charges or billing rates than calls made from within the home communication network.

Since many mobile communication systems are designed to allow substantially seamless transition from one communication network to another, even whilst in a call, the user is typically not aware when their mobile communication device switches to use a different network or network coverage area.

In such circumstances it is desirable that a user of a mobile communication device be informed of appropriate charging parameters, such as charging rate, applicable to a communication, as well as being informed of any changes in charging parameters during the communciation.

Accordingly, one aim of the present invention is to overcome or at least alleviate at least some of the above-mentioned problems.

According to a first aspect of the present invention there is provided a method, in a billing system, of supplying information to a communication device. The method comprises, in response to receiving a request to authorize a communication with the communication device obtaining details of charging parameter applicable to the communication, providing the obtained details to the communication device, determining, during the communication, a change in the charging parameter applicable to the communication, and providing details of the change to the communication device.

Advantageously, the user of a mobile communication device is quickly alerted to any changes in charging parameters, such as billing rate, applicable to the ongoing communication, thereby enabling the user to determine whether to terminate or continue the call. Furthermore, since the charging parameters are sent directly from the billing system they are accurate.

Suitably, the step of obtaining details comprises obtaining details of the charging rate applicable to the communication.

Suitably, the step of determining comprises determining a change in the charging rate applicable to the communication.

The step of determining a change in the charging parameters may comprise determining when the communication device moves to a communication network having different charging parameters.

Suitably, the step of determining a change in the charging parameters comprises determining when a charging model applicable to the communication dictates a change in a charging parameter during the communication.

Suitably, the method further comprises establishing a data connection with the communication device and providing the obtained details of any changes to the charging parameters to the communication device over the established data connection.

Preferably, the step of providing details of the change in charging parameter causes the communication device to alert the user of the device to the change.

According to a second aspect of the present invention, there is provided a method, in a communications device, of producing an alert when a charging parameter associated with an ongoing communication changes during the communication. The method comprises determining when a change in a charging parameter applicable to the ongoing communication has occurred; and generating an alert when it is so determined.

Suitably, the step of determining a change in a charging parameter comprises receiving from a billing system information identifying a change in the billing rate applicable to the communication.

Suitably, the method further comprises establishing a data connection with the billing system, and receiving the information identifying the change in the billing rate over the established data connection.

Preferably, the information is received during the ongoing communication.

The step of generating the alert may further comprise generating an alert suitable for ensuring that a user of the mobile communication device is made aware of the change.

According to a third aspect of the present invention, there is provided a billing system operable in accordance with any of above-described method steps.

According to a fourth aspect of the present invention, there is provided a communications device operable for producing an alert when a charging parameter associated with an ongoing communication changes during the communication. The communication device comprises processing logic for determining when a change in a charging parameter has occurred, and a user interface for generating an alert when it is so determined that a change in a charging parameter has occurred.

Suitably, the processing logic is adapted for determining a change in the billing rate applicable to the communication.

Suitably, the communication device further comprises a data connection module for establishing a data connection with the billing system, and for receiving the information identifying the change in the billing rate over the established data connection.

Preferably, the data connection module is operable for receiving the information during the communication.

The communication device may further comprise a user interface for generating an alert suitable for ensuring that a user of the mobile communication device is made aware of the change.

Embodiments of the present invention will now be described, by way of example only, with reference to the accompanying drawings, in which:
Figure 1 is a block diagram showing a conventional telephony system using a pre-paid billing system, according to the prior art;
Figure 2 is a block diagram showing a mobile telephony system 200 according to one embodiment of the present invention;
Figure 3a is a flow diagram outlining example processing steps taken by a billing system according to one embodiment of the present invention;
Figure 3b is a flow diagram outlining example processing steps taken by a communication device according to one embodiment of the present invention;
Figure 4 is a message flow diagram showing example session initiation protocol (SIP) message flows according to an embodiment of the present invention;
Figure 5 is a block diagram showing a mobile communication system 500 according to one embodiment of the present invention.

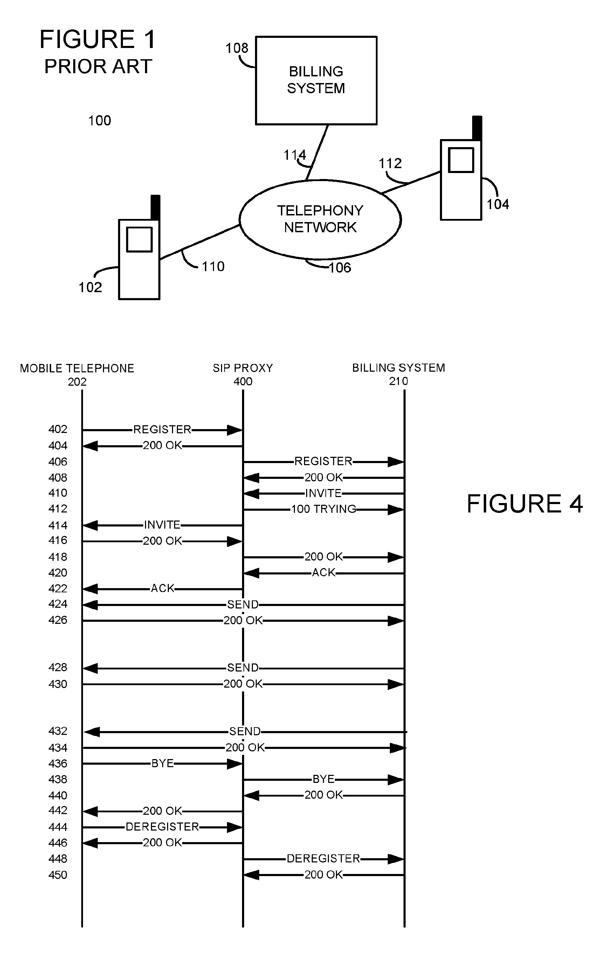

Referring now to Figure 1, there is shown a block diagram showing a conventional circuit-switched telephony network 100 using a pre-paid billing system 108 according to the prior art. Those skilled in the art will appreciate that the diagram gives a somewhat simplified view and that not all network elements are shown. Those skilled in the art will also appreciate that the network 106 provides both signaling and voice paths, and may suitably be a first or second generation (so-called 1g or 2g network), such as a global system for mobile (GSM) network or other similar network.

The network 106 may also provide, although this is not shown, access to packet data services via a packet-switched data network. However, those skilled in the art will appreciate that current 1g or 2g networks do not enable simultaneous use of both circuit-switched and packet-data networks.

The user of the mobile communication device 102 is a subscriber to the telephony network 106 and has a pre-paid subscriber account, details of which are stored in a pre-paid billing system 108. The pre-paid billing system 108 comprises a database (not shown) of all of the subscribers of the network 106 having a pre-paid billing account along with details of their current account balance.

When the user of the mobile communication device 102 makes a telephone call to the mobile communication device 104 signaling messages, such as SS7 signaling messages, are sent to the telephony network 106 over a signaling path 110. The signaling messages indicate the called party number of the mobile communication device 104 and the calling party number of the mobile communication device 102. The network 106 recognizes the calling party number as having an associated pre-paid account and requests authorization from the billing sub-system 108, via a signaling path 114, for the call to be completed.

If the account balance is positive, authorization is given and the network completes the call establishment request in the normal manner. If, however, the current account balance is zero or negative, the call establishment request is not completed, and an appropriate audio message may be played to the mobile communication device 102 indicating that the subscriber does not have sufficient credit to place a call.

If the call is connected, the network 106 periodically informs the billing system 108 that the call is on-going. The frequency at which this is done may be specified by the billing system 108 and may vary depending on, for example, the current account balance or other factors. The frequency may typically be between 30 and 90 seconds, although it may be considerably longer or shorter depending on specific requirements.

The billing system 108 determines the billing rate for the call, for example, based on the called party number and the appropriate call charging scheme applicable to the subscriber of the mobile communication device 102. The billing system repeatedly updates the subscriber's account balance during the call resulting in the subscriber being billed for the call as the call is on-going.

If at any time during the call the account balance of the subscriber's pre-paid account reaches zero, the billing system 108 informs the network 106 and the network 106 disconnects the call.

When the call is disconnected, for example either if the mobile communication device 102 or 104 hangs-up, the network 106 informs the billing system 108, and the subscriber's account balance is updated accordingly.

As will be apparent to those skilled in the art, a similar billing mechanism may be used for use of a data network, such as a general packet radio system (GPRS) network. It will also be understood that in conventional 1g or 2g networks it is not typically possible to make use of both voice and data networks simultaneously.

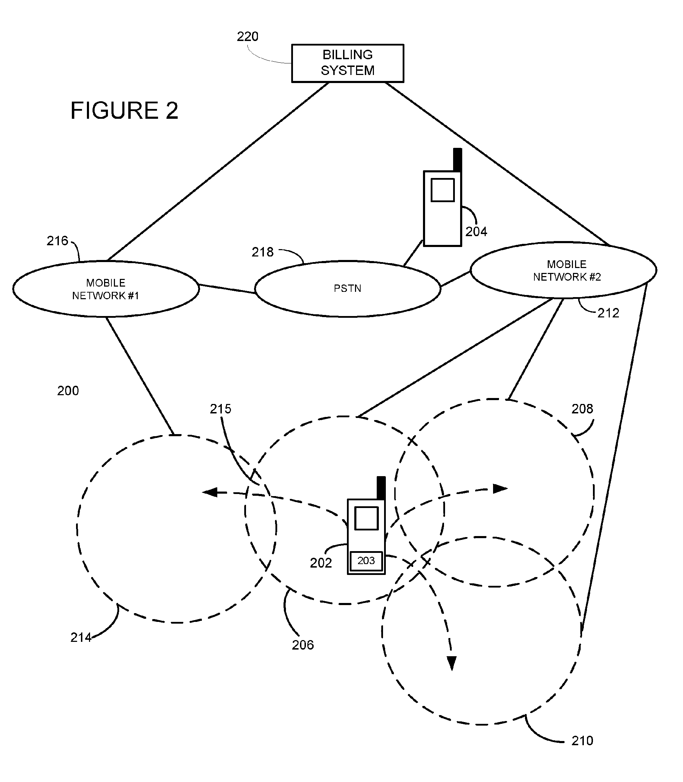

Referring now to Figure 2, there is shown a block diagram of a mobile communication system 200 according to one embodiment of the present invention.

A mobile communication device 202 is a GSM compatible mobile communication device, such as a mobile telephone, and is capable of wirelessly connecting to the mobile telephony network 212 when within a radio coverage area provided by a base station transmitter (not shown) belonging to the mobile telephony network 212. As is well known in the art. GSM enables the mobile communication device 202 to move between different radio coverage areas, or cells, whilst maintaining a connection to the mobile telephony network 212.

The mobile communication device 202 is also capable of moving between cells provided by different mobile telephony networks, such as mobile telephone network 216, using a technique known as roaming.

The user of the mobile communication device 202 is a subscriber to the mobile telephony network 212 which is deemed the user's home network. However, when outside the coverage of the home network, for example whilst in a foreign country, roaming enables the mobile communication device 202 to access a different mobile telephony network, such as the mobile telephony network 216. Thus, calls made and received whilst roaming are billed to the user through the home mobile telephony network 212. Those skilled in the art will also appreciate that roaming between different networks within the same country, e.g. national roaming, may also be possible.

As will be well appreciated by those skilled in the art, however, the charges applicable for accessing a non-home mobile telephony network, such as the mobile telephony network 216, for example whilst roaming, are typically different than those applicable when accessing the home mobile telephony network 212.

Generally, however, users are aware of the typically higher charges applicable when roaming, and are able to verify the current mobile telephone network to which their mobile communication device is currently connected prior to making a telephone call or otherwise accessing a network.

However, if the user of the mobile communication device 202 is moving whilst making a telephone call, for example, whilst in a train, there may come a time, for example at the geographic location 215, when the mobile communication device 202 roams to the mobile telephony network 216, thereby resulting in higher call charges being applicable to the portion of the call made through the mobile telephony network 216. However, because of the way in which mobile telephone systems are designed to seamlessly enable a mobile communication device to roam from one mobile telephony network to another, the user is unlikely to be aware that the billing rate for the call has changed.

The same problem can also occur within a single mobile telephony network, such as the mobile telephony network 212, having multiple cells where different charging tariffs are applicable to calls made from different cells. For example, the mobile telephony network 212 may be arranged so that access to the network 212 from within cell 206 is charged using one charging model, whilst access to the network 212 from within cells 208 or 210 is charged using a different charging model. Such a differentiated charging scheme may be used, for example, so that calls made from within a cell covering an underground train station have a higher billing rate than calls made from within a cell covering a city center.

The mobile telephony networks 212 and 216 provide both a circuit-switched network, providing voice and signaling paths, and a data network. In the present embodiment the mobile communication device 202 is able to make simultaneous use of the data network 210 and the circuit-switched network 208. Such functionality may be provided for, for example, by so-called third generation (3g) telephony networks, such as a universal mobile telecommunications service (UMTS), wideband code division multiple access (WCDMA) network, or the like, and compatible communication devices.

The user of the mobile communication device 202 is a subscriber to the mobile telephony network 212 and has a pre-paid user account, details of which are stored in a pre-paid billing system 220. The pre-paid billing system 220 comprises a database (not shown) containing details of all of the subscribers of the network 212 having a pre-paid billing account along with details of their current account balance and information enabling the billing system 220 to determine a billing rate to be applied to any given call. Although shown as being outside the telephony network 212, the billing system 220 may equally be incorporated therein.

When the user of the mobile communication device 202 places a circuit-switched voice call to a telephone 204 a call establishment request in the form of signaling messages, such as SS7 signaling messages, are sent to the mobile telephony network 212 over a voice/signaling path. The signaling messages indicate the called party number of the mobile communication device 204 and the calling party number of the mobile communication device 202. The network 212 recognizes the calling party number of the mobile communication device 202 as having an associated a pre-paid account and requests from the billing sub-system 220, via a signaling path, authorization to complete the call establishment request. If the subscriber's account balance is positive the call establishment request is authorized and may be completed with the call being connected in the normal manner. If, however, the current account balance is zero or negative, the call establishment request is not authorized and hence not completed. In this case an appropriate audio message or other indication may be notified to the mobile communication device 202 indicating that the subscriber does not have sufficient credit to place a call.

If the call is connected, the network 212 notifies the billing system 220 to appropriately update the subscriber's account balance. Periodically during the call the network 212 notifies the billing system 220 that the call is still in progress so that the subscriber's account balance can be debited during the lifetime of the call. Preferably the account balance is debited in real-time or in substantially real-time.

If, during the call, the mobile communication device 202 moves into a network coverage having a different billing parameter, such as billing rate, such as network coverage area 214, 208 or 210, the billing system is notified in an appropriate manner. For example, if the mobile communication device 202 roams onto the mobile network 216 the billing system will be notified that additional roaming charges are applicable or that the billing rate has otherwise changed.

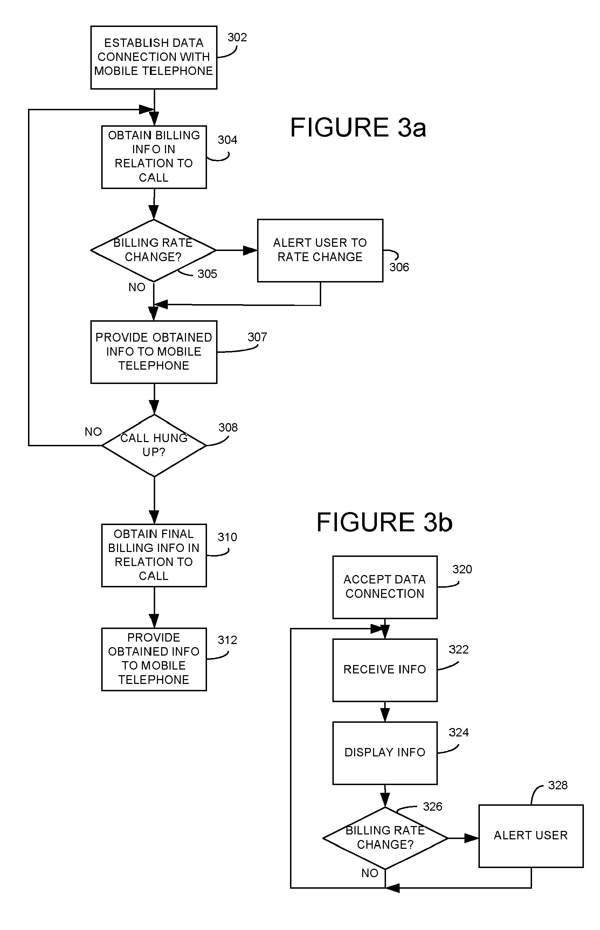

Further reference is now made to Figure 3a which is a flow diagram outlining example processing steps taken by the billing system 220 according to one embodiment of the present invention, and Figure 3b which a flow diagram outlining example processing steps taken by a client information application 203.

When the billing system 220 is requested to authorize the completion of a call establishment, as described above in response to the mobile communication device 202 making a call establishment request, the billing system 220 attempts to establish (step 302), via a data network, a data connection with a client information application 203 running on the mobile communication device 202. The client information application 203, through for example a suitable data connection module, accepts the connection establishment request (step 320) enabling the data connection to be established.

Once the data connection is established the billing system 220 obtains (step 304) and provides (step 307) to the client information application details of information relevant to the call. For example, relevant information may include charging parameters of the subscriber's current account balance, such as the call billing rate applicable for the current call, expiry date of the account balance, details of special offers or promotions, or any relevant or useful information. The call billing rate may be a billing amount for a predetermined period of time, for example 0.10 cents wherein the predetermined period of time is one minute. Alternatively, the call billing rate may include details of the period of time to which the billing amount is applicable, for example, 0.25 cents per call, or 0.45 cents per 30 seconds. Such information is supplied to the mobile communication device 202 whilst the call establishment request is completing, or whilst the call is connected.

The client information application 203 receives the information (step 322) and stores the received information in a suitable storage device, such as an internal memory, and outputs (step 324) the received information to the user via a suitable output device on the mobile communication device 202, such as a suitable visual display device. Alternatively, output of the information could be by way of an audio output, vibrating output any other suitable sensory output system.

As the billing system 220 updates the subscriber's account balance in the billing systems 220 throughout the lifetime of the established call, so the billing system 220 periodically provides details of the current account balance and, where appropriate, current call billing rate to the mobile phone 202 over the data connection 214. In a preferred embodiment the billing system 220 supplies information such as the subscriber's account balance in real or substantially real-time, with the aim being that the information provided to the mobile communication device 202 closely resembles that stored or obtained by the billing system 220.

If at any time during the call the billing rate changes, for example if the mobile communication device 202 moves into a network coverage area having a different billing rate or tariff model, the billing system detects the change (step 305) and preferably alerts, for example via a user interface, the user to the rate change (step 306) as soon as possible. When the new billing rate is received by the mobile communication device 202 the client information application 203 determines, for example through use of suitable processing logic, that the billing rate has changed (step 326) and alerts (step 328) the user of the mobile communication device 202 in a suitable manner, such as by an audible alert, a vibratory alert, or any other suitable alerting mechanism, such that the user is aware of the change in billing rate. In this way, the user of the mobile communication device 202 is constantly aware of the current billing rate being applied to a call, allowing the user to either continue the call or to terminate the call as desired.

When the call is disconnected (step 308), the billing system may obtain (step 310) and provide (step 312), for example, further information including, for example, details of the total cost of the call.

In this way, the mobile communication device 202 is provided with up-to-date information regarding relevant account, financial, or other information that may be required or of interest to the subscriber during a call or communication. Furthermore, since the subscriber's account balance is stored in the mobile communication device 202 by the client information application it is accessible to the user of the mobile communication device 202 through the client information application at any time.

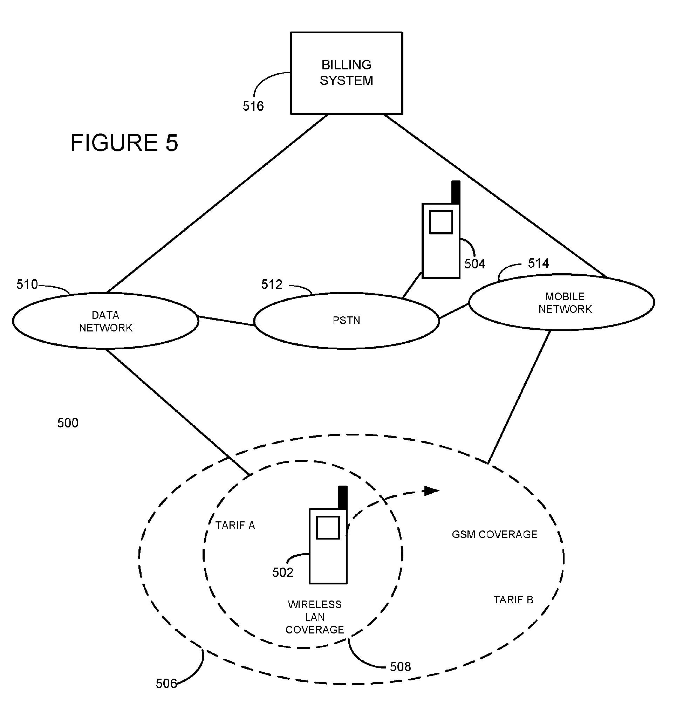

Further details, according to an embodiment of the present invention, of one way in which the billing system 220 may provide information to the mobile communication device 202 using the Session Initiation Protocol (SIP) are provided below, with additional reference to Figure 4. Figure 4 is a message flow diagram showing example SIP messages which may be sent between the billing system 220, acting as a SIP application server, the mobile communication device 202, acting as a SIP user agent, via a SIP proxy 400. Note that for clarity the SIP proxy 400 is not shown on Figure 2.

When the mobile communication device 202 initially connects to the mobile telephony network 206, for example after an initial power-on, the mobile communication device 202, for example through the aforementioned client information application, registers its identity with the SIP proxy 400 by sending a REGISTER message 402. The SIP proxy 400 responds with a SIP 200 OK message 404 once registration has been accepted. The proxy 400 forwards the REGISTER message 404 to the billing system 220 (message 406) causing the mobile communication device 202 to be registered with the billing system 220. The billing system 220 acknowledges the registration with a 200 OK message (408).

The billing system 220 creates a logical message session relay protocol (MSRP) URI and creates a session description protocol (SDP) offer containing the generated MSRP URI. The billing system 220 further assigns a local port number for a MSRP billing session. The billing system 220 sends an INVITE request (410) to the mobile communication device 202 (414) via the SIP proxy 400. The proxy 400 responds with a 100 TRYING message provisional response. In response to receiving the INVITE message (414) the mobile communication device 202 sends a 200 OK message (416) to the billing system 220 containing a SDP message session attribute containing a unique MSRP URI for the session with the billing system 220. The mobile communication device 202 binds a TCP socket to its URI and goes into a listening mode.

The 200 OK message is forwarded (418) to the billing system 220 and in response thereto the billing system 220 responds with an ACK message 420. The billing system 220 binds a TCP socket to its URI and initiates a connection with the mobile communication device 202 using the created MSRP URI. The ACK message 422 is forwarded to the mobile communication device 402 via the proxy 400.

When the billing system 220 is requested to authorize a call establishment request from the mobile communication device 202 it sends information to the mobile communication device 202 over the MSRP session using an MSRP SEND request 424 using the established TCP connection. The mobile communication device 202 acknowledges the reception of the MSRP SEND request with a MSRP 200 OK message 426 sent using the established TCP connection.

Periodically, the billing system 220 sends further information to the mobile communication device 202 (428 and 432), to which the mobile communication device 202 appropriately responds with a MSRP 200 OK messages (430 and 434). This process continues whilst the call is in progress. The process may also continue after the call is disconnected enabling, for example, the user to be informed when the account balance is recharged.

When the mobile communication device 202 is switched off it sends a BYE request 436 to the billing system 220 (message 438) via the proxy 400. The billing system 220 invalidates the local MSRP state for the current session with the mobile communication device 202 and confirms this with a 200 OK message (440 and 442). The mobile communication device 202 then proceeds to de-register itself the proxy 400 by sending a DEREGISTER message (444). The proxy 400 responds with a 200 OK message (446) once the deregistration has been completed, and forwards the DEREGISTER message to the billing system 220 (message 448) informing the billing system the mobile communication device 202 is no longer registered. Finally, the billing system 220 acknowledges the proxy 400 by sending a 200 OK message 450.

In a further embodiment the billing system 220 is arranged to only provide the subscribers account balance and the billing rate applicable to the call to the mobile communication device 202 at the start of the call, or whenever the billing rate changes, rather than periodically throughout the lifetime of the call. Upon receiving the information, and upon completion of the call establishment request, the client information application starts a timer to determine the length of the call. The client information application outputs the received account balance via the mobile communication device 202 and, throughout the lifetime of the call, periodically updates the stored and output account balance based on the received billing rate applicable to the call and the current length of the call. In this way the mobile communication device 202 permanently stores and calculates an account balance which aims to accurately mirror the subscriber's account balance stored in the billing system 220.

In this way, the billing system only has to communicate information to the mobile communication device 210 at the start of each call, or whenever the billing rate changes during a call, thereby reducing the network resources required.

Furthermore, by storing the calculated account balance in the mobile communication device 210 enables a subscriber to consult his account balance at any time, even when a connection to the network 206 is not available. The internally calculated account balance should, therefore, accurately mirror the actual subscriber account balance stored in the billing system 220. In the case of any discrepancy, the next time a call is made by the mobile communication device 202 the billing system will cause the actual current account balance held in the billing system 220 to be stored by the client information application of the mobile communication device 202.

A further example of where a change in billing rate may occur during a call is outlined in Figure 5. Figure 5 is a block diagram showing a simplified overview of a telecommunication system 500, in which multi-standard mobile communication device 502 is capable of connecting to numerous different communication systems. In the present embodiment, the mobile communication device 502 is capable of connecting to a mobile telephony network 514, for example through use of the global system for mobile (GSM) protocol, and additionally is capable of connecting to a data network 510, for example through use of a suitable wireless local area network (W-LAN) protocol such as 802.11x. The geographical area within which the mobile communication device 502 is able to connect to the mobile telephone network 514 through GSM is shown as network area, or cell, 506. The geographical area within which the mobile communication device 502 is able to connect to the data network 510 using W-LAN is shown as coverage area 508.

Such a system enables the mobile communication device 502 to make free or low-cost voice over Internet Protocol (VoIP) calls using the data network 510 when the mobile communication device 502 is within reach of a suitable W-LAN base station. When the mobile communication device 502 moves outside of the coverage area 508, the mobile communication device 502 automatically switches to using the GSM protocol for connecting to the mobile telephony network 514. Typically, a W-LAN coverage area may be set-up by the user within a home environment, enabling the user of the mobile communication device 502 to use the data network 510 for placing free or low-cost VoIP calls from within the home environment. When outside of the home environment, the user of the mobile communication device 502 relies on the larger coverage of the mobile telephone network 514. Generally the cost of making calls using the mobile telephony network 514 is superior to the cost of making calls using the data network 510.

If the user of the mobile communication device 502 is in the process of making a VoIP call using the data network 510 whilst moving, for example whilst walking from the home environment 508 away from the home environment, when the mobile communication device 502 leaves the home environment the mobile communication device 502 will automatically connect to the mobile telephony network 514 through the GSM cell 506, whereby the ongoing telephone call will be continued, transparently or substantially transparently to the user, using the GSM protocol.

Changes in billing rate may also occur for other reasons, for example such as as part of particular pricing model applicable to a subscriber. For example, a pricing model may exist where the first five minutes of a call are charged at a first rate, and the next five minutes at a different rate. In this case, the user of the communication device is alerted whenever a change in billing rate occurs, whatever the reason for that change in billing rate, and preferably in substantially real-time.

Those skilled in the art will appreciate that in some mobile telephony systems charges may be applied to a subscriber for receiving a call and the above described methods and apparatus may be suitably applied to such systems. For example, the above-described embodiments may be arranged to enable the receiver of a call to be informed of his current account balance and/or and billing rate applicable.

Reference to mobile communication devices is intended to include similar communication devices, such as suitably fixed telephone handsets, suitable personal communication devices and the like.

## Claims

1. A method, in a billing system, of supplying information to a communication device, comprising, in response to receiving a request to authorize a communication with the communication device:
obtaining details of charging parameter applicable to the communication;
providing the obtained details to the communication device;
determining, during the communication, a change in the charging parameter applicable to the communication; and
providing details of the change to the communication device.

2. The method of claim 1, wherein step of obtaining details comprises obtaining details of the charging rate applicable to the communication.

3. The method of claim 2, wherein the step of determining comprises determining a change in the charging rate applicable to the communication.

4. The method of claims 1, 2 or 3, wherein the step of determining a change in the charging parameter comprises determining when the communication device moves to a communication network having different charging parameter.

5. The method of claims 1, 2 or 3, wherein the step of determining a change in the charging parameter comprises determining when a charging model applicable to the communication dictates a change in charging parameter during the communication.

6. The method of any of claims 1 to 5, further comprising establishing a data connection with the communication device and providing the obtained details of any changes to the charging parameter to the communication device over the established data connection.

7. A method of any previous claim, wherein the step of providing details of the change in charging parameter causes the communication device to alert the user of the device to the change.

8. A method, in a communications device, of producing an alert when a charging parameter associated with an ongoing communication changes during the communication, the method comprising:
determining when a change in a charging parameter has occurred; and generating an alert when it is so determined.

9. The method of claim 8, wherein the step of determining a change in a charging parameter comprises receiving from a billing system information identifying a change in the billing rate applicable to the communication.

10. The method of claim 8 or 9, further comprising establishing a data connection with the billing system, and receiving the information identifying the change in the billing rate over the established data connection.

11. The method of claim 10, further comprising receiving the information during the communication.

12. The method of claim 8, 9, 10 or 11, the step of generating the alert further comprising generating an alert suitable for ensuring that a user of the mobile communication device is made aware of the change.

13. A billing system operable in accordance with any of claims 1 to 7.

14. A communications device operable for producing an alert when a charging parameter associated with an ongoing communication changes during the communication, comprising:
processing logic for determining when a change in a charging parameter has occurred; and
a user interface for generating an alert when it is so determined that a change in a charging parameter has occurred.

15. The communications device of claim 14, the processing logic being adapted for determining a change in the billing rate applicable to the communication.

16. The communication device of claim 14 or 15, further comprising a data connection module for establishing a data connection with the billing system, and for receiving the information identifying the change in the billing rate over the established data connection.

17. The communication device of claim 14, 15 or 16, the data connection module being operable for receiving the information during the communication.

18. The communication device of claim 14, 15, 16 or 17, further comprising a user interface for generating an alert suitable for ensuring that a user of the mobile communication device is made aware of the change.
